# NEW EUROPEAN PATENT SPECIFICATION

(11) **EP 0 320 545 B2**
(45) Date of publication and mention of the opposition decision: **25.03.1998**
(45) Mention of the grant of the patent: 02.03.1994
(21) Application number: 87311059.7
(22) Date of filing: 15.12.1987
(51) Int. Cl.: H04N 7/06, H04N 7/04

(54) **Television transmission system with stereo sound**
Fernsehübertragungssystem mit Stereoton
Système de transmission de télévision avec son stéréo

(43) Date of publication of application: 21.06.1989
(73) Proprietor: THOMSON multimedia Sales UK Limited, Enfield, Middlesex EN1 1DZ (GB)
(72) Inventor: Holmes, Stuart Jackson, Micklethwaite Bingley West Yorkshire (GB); Thompson Geoffrey, Bradford West Yorkshire BD9 6NL (GB)
(74) Representative: Hartnack, Wolfgang, Dipl.-Ing.

(56) References cited:
- EP-A- 127 136
- EP-A- 0 251 626
- US-A- 3 795 763
- US-A- 4 281 355
- NHK LABORATORIES NOTE, no. 282, November 1982, pages 1-13, NHK, Tokyo, JP; T.YOSHINO et al.: "PCM sounds on digital subcarrier in television for a satellite broadcasting system"
- PATENT ABSTRACTS OF JAPAN, vol. 8, no. 99 (E-243)[1536], 10th May 1984 & JP-A-59 17 750
- IEEE TRANSACTIONS ON CONSUMER ELECTRONICS, vol. CE-31, no. 1, February 1985,pages 24-31, IEEE, New York, US; H. UKAI et al.: "Sound PCM decoder LSls for Japanese DBS"
- IEEE TRANSACTIONS ON CONSUMER ELECTRONICS, vol. CE-30, no. 3, August 1984,pages 265-271, IEEE, New York, US; T. ARAI et al.: "Receiver for DBS with digital audio signals"
- RUNDFUNKTECHNISCHE MITTEILUNGEN, vol. 29, no. 1, January/February 1985, pages 23-35; C. DOSCH, C-MAC/PAKET: "Normvorschlag der Europäischen Rundfunkunion für den Satellitenrundfunk"
- IEEE TRANSACTIONS ON CONSUMER ELECTRONICS, vol. CE-30, no. 3, August 1984,pages 462-466, IEEE, New York, US; Y. KOJIMA et al.: "A new digital audio and data transmission system using the CATV network"
- WIRELESS WORLDS, vol. 90, no. 1582, July 1984, pages 17-19, Oldhill, Dunstable, GB; E.H. HARTWELL: "Digital stereophony with television"
- BBC Research Department Report, vol. 15, 1985, "Signalling in Parity - a brief History"
- Draft Specification of Standards for UK Stereo with Television Transmission", Rev. 1
- Funkschau, 18/1985, pages 59-63,

## Description

The present invention relates to transmission of audio signals to accompany transmitted video signals, in which system the audio/data signals comprise a stream of digital elements formed into a plurality of frames, each frame comprising sections, namely a section to indicate a start of a frame, a section to contain control information, a section to contain additional data and a section to contain the audio/data information, whereby the audio signal is transmitted with the audio/data information section. Such a system is described in NHK Laboratories note, No. 282, November 1982, pages 1 - 13. NHK, Tokyo, JP; Takihiko Yoshino et al: "PCM Sounds on Digital Subcarrier and Television for a Satellite Broadcasting System". From BBC Research Department Report 1985. Vol. 15, page 5, it is known to code audio/data signals as a multiple bit sample word, each word having an associated parity bit.

A proposed transmission system (Specification of a Standard for UK Stereo-with-Television Transmissions, September 1986) for stereo signals to accompany conventional television transmissions provides a serial data stream partitioned into 728-bit frames, each transmitted in a millisecond. Each frame has: a first section of eight bits comprising a Frame Alignment Word (FAW) which marks the start of the frame; a second section of four bits which provide control information, being one flag bit (namely Cₒ, which alternates between O and 1 every 8 milliseconds to determine odd and even frames over a 16 frame sequence) and three mode bits (namely C₁, C₂, and C₃, which indicate the nature of the transmitted signal, eg. mono, stereo, dual-language, data); a third section of twelve bits of additional data, independent of the control information bits; and finally a fourth section of sixty-four 11-bit words corresponding to the audio (or data if appropriate) being transmitted, this last section having a total of 704 bits, for locking purposes only the FAW signals are used.

In each frame as transmitted, interleaving is applied to the block of 720 bits which follow the FAW in order to ensure that adjacent bits are not transmitted seqentially so as to minimise the effect of multiple-bit errors. The interleaving pattern places data bits, which are adjacent in the frame structure as output by the television receiver, in positions at least 16 clock periods apart in the transmitted bit stream (i.e. at least 15 other bits occur between bits which are adjacent in the output frame structure).

In the production of the sound signals, they are sampled at 32 kHz and coded initially with a resolution of 14 bits per sample For transmission, the number of bits per sample is reduced to 10, using near-instantaneous companding, and one parity bit is added to the end of each 10-bit sample word for error detection and scale-factor signalling purposes, thereby resulting in the 11-bit words in the fourth section of the frame.

In the operation at a television receiver to derive the appropriate range value (corresponding to the scale-factor) of a transmitted signal, the provision of the interleaving structure means that a parity bit may be received before some of the bits of the relevant word; accordingly, a frame is de-interleaved by using a de-interleave memory addressed by row and column counters, and then stored before the range-determining operation is started.

The invention is defined by the claims.

Preferably the system includes means to compare, after transmission, the non-interleaved sections of a number of adjacent frames, thereby to determine any errors in the non-interleaved sections (for example caused during transmission). In this way, the non-interleaved sections of a frame can be protected as well as, or even better, than the interleaved section while still providing simplified processing at the television receiver.

In order that the invention may more readily be understood. a description is now given, by way of example only, reference being made to the accompanying drawings in which:-
Figure 1 is a block diagram of a transmission system embodying the present invention;
Figure 2 is a schematic representation of the structure of a stereo signal for use in the system of Figure 1;
Figure 3 is a schematic diagram of part of a television receiver of the system of Figure 1:
Figure 4 is a circuit diagram of part of a television receiver of the system of Figure 1;
Figure 5 is a schematic diagram of a further part of a television receiver of the system of Figure 1; and
Figure 6 is a representation of waveforms in connection with the feature of Figure 5.

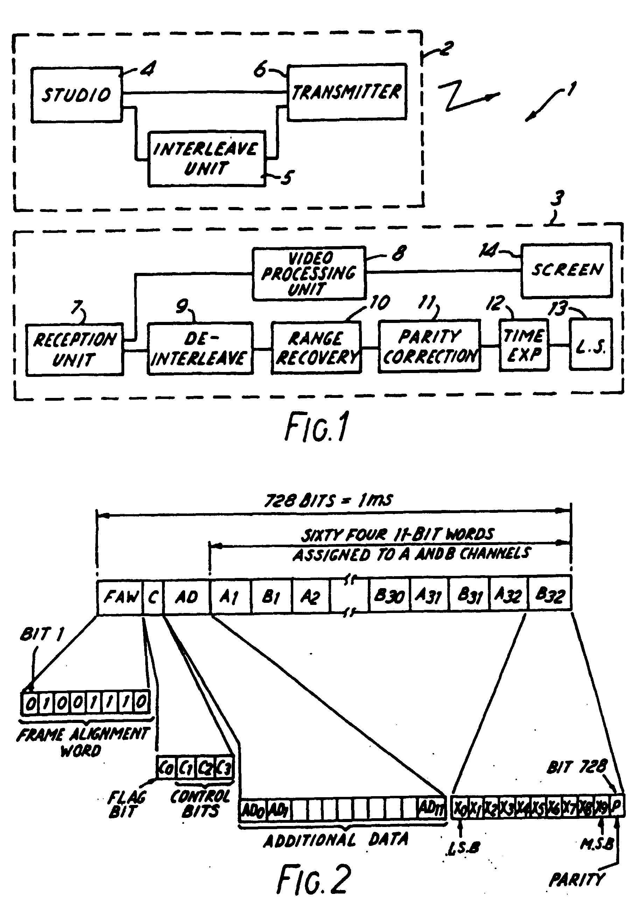

In Figure 1, there is shown a transmission system 1 for the transmission of PAL System-I television signals accompanied by an additional stereo signal for enhanced audio reception. The system includes a transmission station 2 and a number of television receivers of which only one, referenced 3, is shown. Receiver 3 may be a conventional PAL television receiver connected with a decoder unit specifically designed to process the stereo signal and reproduce the stereo sound at, or for, the receiver; alternatively. the receiver may be specifically designed to process the stereo signal as well as, or instead of, processing the audio signal incorporated in the PAL System-I signal.

Transmission station 2 has a studio 4 which provides a recording consisting of a channel of video signals (incorporating the normal audio component) in accordance with the System-I PAL standard, and a channel of stereo signals of a format as shown in Figure 2. Signals of this stereo channel are passed to an interleaver unit 5 which interleaves the audio data within each frame, and then passes the resultant signals to a transmitter 6 which broadcasts the PAL video channel and the stereo channel, the latter having a carrier frequency 6.552 MHz above the frequency of the transmitted vision carrier.

The combined signal passes to a reception unit 7 at television receiver 3, and is separated out again into the PAL video channel (the subsequent processing of which at video processing unit 8 is conventional and therefore a description is not pertinent) and the stereo channel which is input to a de-interleaver unit 9 for re-arrangement of the bits, in the audio data section of each frame to their original sequence before input to interleaver unit 5. A range recovery unit 10 inspects each word and its corresponding parity bit in order to determine whether there is compatability, from which information it derives a three-bit range value for that frame. Thereafter a parity correction unit 11 effects any necessary alterations to the words in view of the results of the compatability inspection, a time expansion unit 12 increases the duration of the audio words to account for the other sections in a frame and the resultant signal passes to a loudspeaker unit 13 for output synchronized with display of the signal on the video channel at cathode ray tube screen 14.

Figure 2 shows the structure of one frame of the signal in the stereo channel of transmission system 1 before interleaving. The sixty-four words in the audio information section are arranged such as to alternate between the two output signals of the stereo channel, i.e. the first, third and subsequent odd words are associated with output signal A (e.g. the lefthand side signal) of the stereo channel, while the second, fourth and subsequent even words are associated with output signal B (e.g. the righthand side signal) of the stereo channel. Thus 32 words for each output signal of the stereo channel are transmitted in every frame.

The system 1 is capable of transmitting signals other than stereo signals on this channel; thus for example this channel may carry mono audio signals (these being of higher quality than those incorporated with the conventional PAL video signal) in one language or more, or data signals representing information other than sound and optionally related to the television display.

After interleaving at unit 5, the structure of the 728 bits in a frame is as shown in the Table 1 given below, in which the numbers relate to the original position before interleaving. In this Table, the bits in the audio information section have been laid out in a lattice form to show clearly the interleaving structure; of course, in the signal itself, this section has a continuous sequence of bits formed by reading left to right along a row, the rows being taken from the top downwards.

**Table 1**

| FAW | CONTROL INFORMATION | ADDITIONAL DATA | AUDIO INFORMATION |
|---|---|---|---|
| 1 to 8 | 9 to 12 | 13 to 24 | 25,69,113,157....685 |
| | | | 26,70,114........686 |
| | | | 27,71,115........687 |
| | | | 28,72,116........688 |
| | | | 29,..............689 |
| | | | 30,..............690 |
| | | | .................... |
| | | | .................... |
| | | | 68,112,156.......728 |

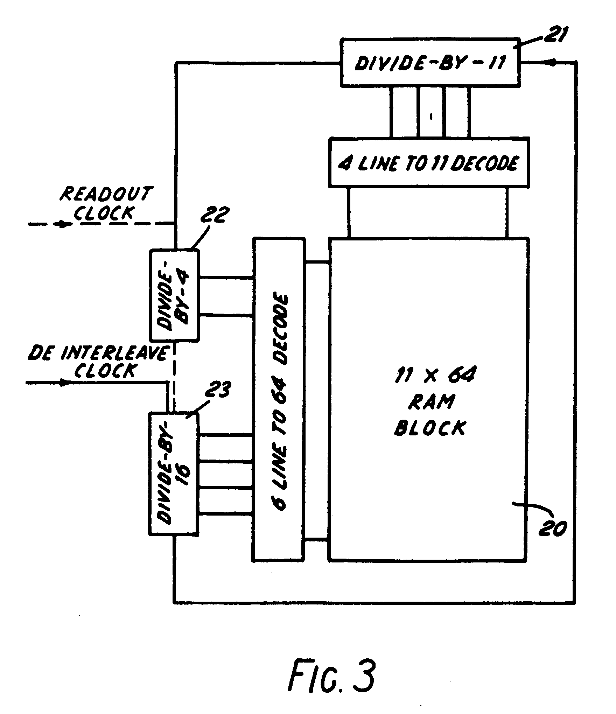

The de-interleave unit 9 has a switch unit to direct incoming frames alternately to two RAM stores, each of which corresponds to the arrangement shown in Figure 3 whereby a 11 by 64 RAM block 20 has a divide-by-11 counter 21, a divide-by-four counter 22 and a divide-by-16 counter 23.

Since the RAM block 20 has 64 rows by 11 columns, a divide-by-64 counter and a divide-by-11 counter are required for addressing. In the write mode the divide-by-64 counter is formed of counter 23 and counter 22. With all the counters initially containing 0, the print clock pulse changes the number in counter 23 to 1 and the decoder selects row 4 while the decoder output of counter 21 selects column 0. The second clock pulse changes the number in counter 23 to 2, which is decoded as row 8, the third clock pulse changes the number to 3 which is decoded as row 12, and so on. In this way rows 0,4,8,16 and so on to 60 are addressed in turn while column 0 continues to be addressed. After row 60 column 0 has been addressed, the next clock pulse resets counter 23 to 0 and the overflow pulse clocks counter 21 to 1. Rows 0,4,8,16 and so on to 60 are now again addressed in turn but with column 1 addressed. This continues until row 60 column 10 has been written. The next clock pulse produces an overflow from counter 21 which clocks 1 into counter 22. The number is added to the row count of counter 23, so the addressed rows are row 1,5,9, 17 and so on to 61. When row 61 column 10 has been written, the overflow from counter 21 changes the number in 22 to 2, and so on. In this way the data bits are stored in the RAM in de-interleaved order and can be read out by simply addressing each of the rows in turn using the divide-by-64 counter formed by the divide-by-16 counter 23 and the divide-by-4 counter 22. Since the 11 bits of a word are read out in parallel, the divide-by-11 counter 21 is not needed for read-out and the same counter can therefore be used to address the second RAM which writes while the first is being read.

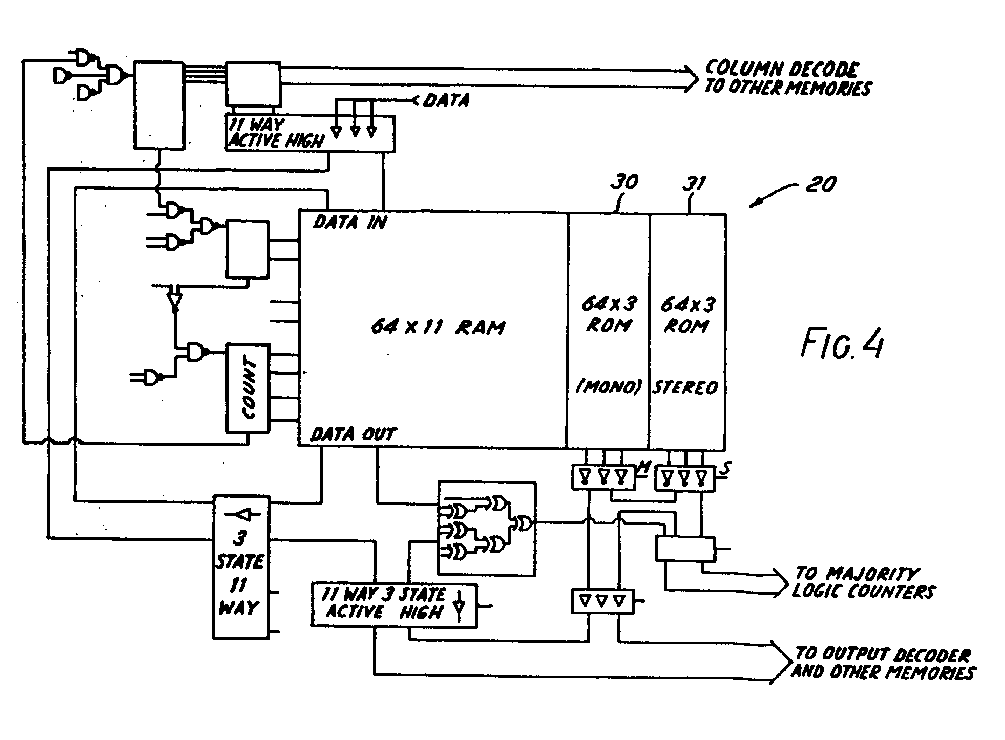

There is shown in Figure 4 a circuit diagram of the memory organization and address logic of a store 20 and its associated electronic circuits and components in greater detail than shown by Figure 3. Store 20 includes two 64 x 3 ROM's 30, 31, one being used for range recovery in mono signals, and one being used for range recovery in stereo signals.

In a modification, only one divide-by-11 counter is used, being multiplexed between all the memories. Also a ROM, associated with the RAM area, is used for range word testing. The use of ROM reduces the amount of chip area which would otherwise have to be employed in the range word test logic. Also the ROM information is held in binary form so that only three rather than six select lines need to be routed around the IC to the majority logic counters. This again is a saving in chip area. Additionally, a ROM/RAM structure may be of a design so that every word of RAM also accesses a six bit word of ROM. By customising a ROM/RAM system only one row decoder needs to be included. By multiplexing the range test circuitry only one set of majority logic counters need be included in the integrated circuit.

Using the interleaved structure shown in Table 1, the information and parity bits of each word are transmitted in the correct order, i.e. the least-significant-bit first and the parity bit last. Thus, as soon as the parity bit has been received the value of its range bit can be determined and sent to the majority logic. With the stores organised in a 64 row by 11 column format, all the received parity bits can be stored in the same column and the action of writing in that column indicates that the parity check can be made on the word in that row. The range bits are therefore determined in real-time rather than after the complete frame has been stored; so read-out can begin immediately and the store will be free by the time the third frame begins to arrive, thereby ensuring that a third store is unnecessary for the processing of stereo signals. A third store is necessary for the processing of "simultaneous dual - language reception" signals, but again the described arrangement provides a reduction in storage necessary, in that conventional processing techniques for such signals require four stores.

There are many instances in the receiver 3 where majority logic must be performed, this being achieved by the use of a counter which can be incremented every time the input is say a "1" and decremented whenever the input is a "0". At the end of the input sequence a test for positive or negative count will give a majority decision of the input sequence.

Alternatively, the counter may be simply incremented when the input is say a "1" and no action taken when the input is in the alternative state. At the end of the input sequence the output of the count can be checked to see if it is greater than a particular value e.g. half the number of input pulses. If it is greater, then the output is one state; if it is less, the majority is the alternative state.

Sound muting which avoids unacceptable clicking of the loudspeaker may be achieved by shifting the output signal right or left with respect to the least significant bit by means of a parallel-to-serial output circuit programmed to shift left or right depending on whether a mute or demute was required.

Because of the structure of the conventional interleave system, it was not possible to do a test range bit operation until the whole of the frame had been transmitted since it was not known when a complete word of information had been written to the memory. However, with the new interleave structure, the rows in the memory fill up left to right hence whenever writing to the last column is necessary, it is implicit in the interleave that all the rest of the data for that word has been previously transmitted. Hence if a detection system is used to identify a last column write by simply looking at an output from the address decoder on the last column, then a read/write operation can be performed and a test range bit generated. When all the rows have been written i.e. at the end of the frame, the required number of test range bits will have been generated and hence the majority logic now contains the correct range word information. This means that as the RAM can now be used for an output operation one less RAM is needed than would otherwise be required producing a saving of chip area and so price.

An alternative way of range recovery is to utilise a high speed processing system in order to calculate the correct range words during the time interval occupied by the frame alignment word, control bits, and auxiliary data. If the range bits could be calculated correctly during this interval, one less RAM is required than would otherwise be needed. Should this calculation period extend over into the transmitted frame alignment control bits and additional data interval, however, then an extra RAM would be necessary.

There exists a problem inherent in the conventional system when non-changing audio information (e.g. silence) is being transmitted. In these circumstances, the sampling systems takes this stationary bit pattern (probably all "0") and multiplies it by a pseudo random sequence. This action creates false frame alignment code pulses. Frame alignment code pulses occur naturally anyway, since the probability of them occuring is 1 in 256, in one frame of information there are on average 2.8 frame alignment codes generated by chance. However, the frame alignment words are spaced at an interval of 728 clock cycles apart i.e. one frame. The detection system then waits for 728 clock cycles (1mS) before checking to see if the same bit pattern occurs. In this way the chance of getting successive FAW patterns is very low (1/256)ⁿ where n is the number of successive tries). However the action of the pseudo random sequence generator on static bit patterns not only creates a FAW but additionally creates it at exactly the right interval since an FAW is created at the same point in each frame after the true FAW. Under these circumstances, should a TV be turned on when there is a period of silence (or when in data transmission and where mono where the data is a constant bit stream), the stereo decoder chip could lock on to the false FAW rather than the true FAW in the signal. There is no way to distinguish that this was a false lock condition.

To overcome this problem, the system has an additional timing circuit included. If one considers the locking circuit to be in two parts, the first part is a FAW detection circuit and the second part a Co bit detector (effectively a digital phase lock loop). Then the normal action of lock would be: firstly the frame alignment code acquires lock and enables the Co detections circuit to lock on to the Co bit waveform; secondly, when the Co and FAW acquisition circuits indicate that both these signals are acquired. the receiver is allowed to proceed with decoding sound.

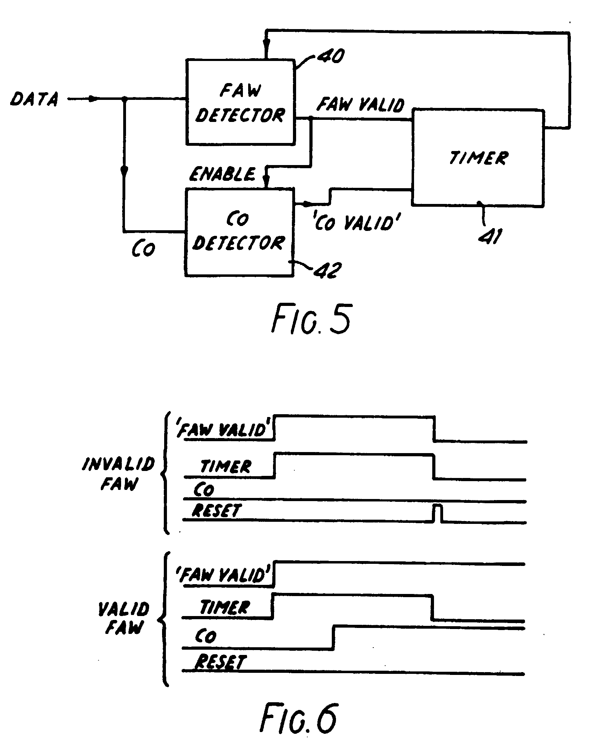

Under false lock conditions, the Co decoder would not lock on to a Co signal since this bit is now incorrectly positioned and the data going into the Co decoder is not the bit in the transmission sequence. Thus, information can be used to reset the FAW detection circuit. As shown in Figure 5, a FAW code circuit 40 generates an output indicating a valid frame alignment code pattern detection. This in turn starts a timing device 41 which times a period sufficient for the Co detector 42 to acquire lock under all useable signal conditions. At the end of this timing period, the Co detector is checked to see if a valid Co detection has taken place. If it has, no action is taken; but if it has not, the FAW detection circuitry is reset and a new frame alignment lock sequence initiated. Figure 6 shows appropriate waveforms.

The present invention also embodies an integrated circuit which incorporates features hereinabove.

## Claims

1. Television receiver (3) for a transmission system (1) to provide an audio/data signal to accompany a transmitted video signal, the television receiver (3) comprising:
- means (7) to input a transmitted audio/data signal comprising a stream of digital elements (bits) formed into a plurality of frames, each frame comprising at least four sections, namely a section (FAW) to indicate the start of a frame, a section (C) to contain control information, a section (AD) to contain additional data and a section (A1, B1, A2, ..., B31, A32, B32) to contain the audio/data information of the audio/data signal,
- means (13) to output the resultant audio/data signal in association with a video signal, whereby the audio/data information section of the received audio/data signal is coded as multiple bit sample words, each word having an associated parity bit which is added to each said multiple sample word of the audio signal for error detection and scale factor signalling purposes, and whereby the television receiver comprises:
- means (9) to de-interleave only the audio/data information section (A1, B1, A2, ..., B31, A32, B32) including the parity bit (P) but not the indication (FAW), additional data (AD) and control (C) section of a frame, the de-interleave means (9) comprising means to change the sequence of the digital elements (bits) of the audio/ data information section within each whole frame as transmitted according to a predetermined relationship (TABLE 1) such as to produce a sequence for output by the television receiver (3),
- wherein, if an output from an indication section detector (40) indicates a valid frame alignment code pattern detection, a timer (41) is started which is used to check whether a flag bit signal change (Cₒ) in said control section information (C) has been detected in a flag bit signal (Cₒ) detector (42) and wherein said indication section detector is reset to initiate a new frame alignment lock sequence if no flag bit (Cₒ) signal change has been detected, in order to avoid the television receiver locking on a false frame alignment word.

2. Television receiver (3) for a transmission system (1) to provide an audio/data signal to accompany a transmitted video signal, the television receiver (3) comprising:
- means (7) to input a transmitted audio/data signal comprising a stream of digital elements (bits) formed into a plurality of frames, each frame comprising at least four sections, namely a section (FAW) to indicate the start of a frame, a section (C) to contain control information, a section (AD) to contain additional data and a section (A1, B1, A2,..., B31, A32, B32) to contain the audio/data information of the audio/data signal,
- means (13) to output the resultant audio/data signal in association with a video signal, whereby the audio/data information section of the received audio/data signal is coded as multiple bit sample words, each word having an associated parity bit which is added to each said multiple sample word of the audio signal for error detection and scale factor signalling purposes and is received after that sample word, the number of bits per sample word being 10 when the parity bit is not regarded, and whereby the television receiver further comprises:
- means (9) to de-interleave only the audio/data information section (A1, B1, A2, ..., B31, A32, B32) including the parity bit (P) but not the indication (FAW), additional data (AD) and control (C) section of a frame, the de-interleave means (9) comprising means to change the sequence of the digital elements (bits) of the audio/ data information section within each whole frame as transmitted according to a predetermined relationship (TABLE 1) such as to produce a sequence for output by the television receiver (3),
each frame consisting of 728 bits, wherein the section to contain the audio/data information has a length of 704 bits and the de-interleaving depth in this section equals four times the number of bits of the multiple bit sampling word length including said associated parity bit,
and wherein the de-interleave means (9) comprise storage means (20) organised in a 64 row by 11 column format to hold a plurality of frames of audio/data signals,
counter means (21, 22, 23) to effect the input of audio/data signals to, and the output from, the storage means (20),
a logic-circuit means to effect re-configuring of the counter means between one mode for effecting input of signals to the storage means and another mode for effecting their output therefrom,
said counter means (21, 22, 23) including a row counter and a column counter (21) controlling said storage means (20),
said row counter being split into a divide-by-4 counter (22) for providing the two least significant bits of the complete row address for said storage means (20) and a divide-by-16 counter (23) providing the remaining bits of the complete row address
and wherein for writing into said storage means (20) the overflow of said divide-by-16 counter clocks said column counter (21) and the overflow of said column counter in turn clocks said divide-by-4 counter,
and wherein said divide-by-16 counter is controlled by a de-interleave clock for writing into said storage means (20) and said divide-by-4 counter is controlled by a storage means readout clock,
and wherein the interleaved data of different frames are written alternately to different RAM stores of said storage means (20) for de-interleaving, the columns of which are commonly addressed by said column counter (21).
and wherein the received parity bits of a frame are stored in a same column of a respective RAM store (20) and the action of writing in that column indicated that a parity check can be made on the multiple bit sample word in that row.

3. Television receiver according to claim 1 or 2, comprising means to compare the non-interleaved sections of a number of adjacent frames to determine any error in the non-interleaved sections.

## Patentansprüche

1. Fernsehempfänger (3) für ein Übertragungssystem (1) zur Lieferung eines Audio/Daten-Signals zur Begleitung eines übertragenen Videosignals, wobei der Fernsehempfänger (3) folgendes enthält:
- Mittel (7) zur Eingabe eines übertragenen Audio/Daten-Signals mit einem Strom von Digitalelementen (Bits) in der Form einer Vielzahl von Rahmen, wobei jeder Rahmen wenigstens vier Abschnitte enthält, nämlich einen Abschnitt (FAW) zur Anzeige des Beginns eines Rahmens, einen Abschnitt (C), der eine Steuerinformation enthält, einen Abschnitt (AD), der Zusatzdaten enthält, und einen Abschnitt (A1, B1, A2, ..., B31, A32, B32), der die Audio/Daten-Information des Audio/Daten-Signals enthält,
- Mittel (13) zur Ausgabe des resultierenden Audio/Daten-Signals zusammen mit einem Videosignal, wobei der Abschnitt für die Audio/Daten-Information des empfangenen Audio/Daten-Signals als Mehrfach-Bit-Abtastwörter kodiert ist und jedes Wort ein zugehöriges Paritätsbit aufweist, das für eine Fehlererkennung und für Skalenfaktor-Signalisierzwecke den Abtastwörtern des Audiosignals angefügt ist und wobei der Fernsehempfänger folgendes enthält:
- Mittel (9) zum Entschachteln nur des Audio/Daten-Informations-Abschnitts (A1, B1, A2, ..., B31, A32, B32) einschließlich des Paritätsbits (P), aber nicht des Anzeige-(FAW), des Zusatzdaten- (AD) und des Steuer-Abschnitts (C) eines Rahmens, wobei die Entschachtelungsmittel (9) Mittel zur Änderung der Reihenfolge der Digitalelemente (Bits) des Audio/Daten-Informationsabschnitts innerhalb jedes vollständigen Rahmens enthalten, wie er entsprechend einem vorbestimmten Verhältnis übertragen wird (Tabelle 1), um so eine Reihenfolge für die Ausgabe durch den Fernsehempfänger (3) zu erzeugen,
wobei dann, wenn ein Ausgang von einem Rahmenbeginn-Anzeige-Abschnitt-Bereichsdetektor (40) die Ermittlung eines gültigen Rahmensynchronisations-Codemusters, ein Timer (41) gestartet wird, der dazu dient zu prüfen, ob eine Kennzeichenbit-Signal-Änderung (Cₒ) in der Steuerabschnitt-Information (C) in einem Kennzeichenbit-Signal-Änderungs-Detektor (42) ermittelt wurde, und wobei der Detektor für den Anzeigeabschnitt rückgesetzt wird, um eine neue Verriegelungsreihenfolge für die Rahmenausrichtung auszulösen, wenn keine Änderung eines Kennzeichenbit-Signals (Cₒ) ermittelt wurde, um zu vermeiden, daß der Fernsehempfänger auf ein falsches Rahmen-Synchronisationswort einrastet.

2. Fernsehempfänger (3) für ein Übertragungssystem (1) zur Lieferung eines Audio/Daten-Signals zur begleitung eines übertragenen Videosignals, wobei der Fernsehempfänger folgendes enthält:
- Mittel (7) zur Eingabe eines übertragenen Audio/Daten-Signals einschließlich eines Stromes von Digitalelementen (Bits) in Form einer Vielzahl von Rahmen, wobei jeder Rahmen wenigstens vier Abschnitte enthält, nämlich einen Abschnitt (FAW) zur Anzeige des Beginns eines Rahmens, einen Abschnitt (C), der eine Steuerinformation enthält, einen Abschnitt (AD) der Zusatzdaten enthält, und einen Abschnitt (A1, B1, A2, ..., B31, A32, B32), der die Audio/Daten-Information des Audio/Daten-Signals enthält,
- Mittel (13) zur Ausgabe des resultierenden Audio/Daten-Signals in Begleitung mit einem Videosignal, wobei der Audio/Daten-Informationsabschnitt des empfangenen Audio/ Daten-Signals als Mehrfach-Bit-Abtastwörter kodiert ist und jedes Wort ein zugehöriges Paritätsbit aufweist, das für eine Fehlererkennung und für Skalenfaktor-Signalisierungszwecke den Abtastwörtern des Audiosignals angefügt ist und nach dem Abtastwort empfangen wird, wobei die Zahl der Bits je Abtastwort 10 beträgt wenn das Paritätsbit nicht berücksichtigt wird, und wobei der Fernsehempfänger außerdem folgendes enthält:
- Mittel (9) zum Entschachteln nur des Audio/Daten-Informationsabschnitts (A1, B1, A2, ..., B31, A32, B32) einschließlich des Paritätsbits (P), aber nicht des Anzeige- (FAW), des Zusatzdaten- (AD) und des Steuer-Abschnitts (C) eines Rahmens, wobei die Entschachtelungsmittel (9) Mittel zur Änderung der Reihenfolge der Digitalelemente (Bits) des Audio/Daten-Informationsabschnitts innerhalb jedes vollständigen Rahmens enthalten, wie er entsprechend einem vorbestimmten Verhältnis (Tabelle 1) übertragen wird, um so eine Reihenfolge für die Ausgabe durch den Fernsehempfänger (3) zu erzeugen, wobei jeder Rahmen aus 728 Bits besteht, wobei der die Audio/Daten-Information enthaltende Abschnitt eine Länge von 704 Bits aufweist und die Entschachtelungstiefe in diesem Abschnitt gleich viermal der Zahl der Bits der Mehrfachbit-Abtastwort-Länge einschließlich des zugehörigen Paritätsbits beträgt,
und wobei die Entschachtelungsmittel (9) Speichermittel (20) enthalten, die in einem Format mit 64 Zeilen zu 11 Spalten zum Beinhalten einer Vielzahl von Rahmen der Audio/Daten-Signale organisiert sind,
Zählermittel (21, 22, 23) für die Eingabe und Ausgabe der Audio/Daten-Signale in die und aus den Speichermitteln (20),
Logikschaltungs-Mittel für eine Rekonfiguration der Zählermittel zwischen einem Modus für die Eingabe der Signale in die Speichermittel und einem anderen Modus für ihre Ausgabe daraus,
wobei die Zählermittel (21, 22, 23) einen Zeilenzähler und einen Spaltenzähler (21) enthalten, die die Speichermittel (20) steuern,
wobei der Zeilenzähler in einen Zähler (22) mit Teilung durch 4 zur Lieferung der zwei Bits geringster Bedeutung der vollständigen Reihenadresse für die Speichermittel (20) und in einen Zähler (23) mit Teilung durch 16 aufgeteilt ist, der die übrigen Bits der vollständigen Reihenadresse liefert,
und wobei zum Einschreiben in die Speichermittel (20) der Überlauf des Zählers mit Teilung durch 16 den Spaltenzähler (21) taktet und der Überlauf des Spaltenzählers daraufhin den Zähler mit Teilung durch 4 taktet,
und wobei der Zähler mit Teilung durch 16 zum Einschreiben in die Speichermittel (20) durch einen Entschachtelungs-Takt gesteuert wird und der Zähler mit Teilung durch 4 durch einen Speichermittel-Auslesetakt gesteuert wird,
und wobei die verschachtelten Daten unterschiedlicher Rahmen zur Entschachtelung abwechselnd in verschiedene RAM-Speicher der Speichermittel (20) geschrieben werden, deren Spalten gemeinsam durch den Spaltenzähler (21) adressiert werden,
und wobei die empfangenen Paritätsbits eines Rahmens in derselben Spalte des entsprechenden RAM-Speichers (20) gespeichert werden und der Schreibvorgang in dieser Spalte anzeigt, daß eine Paritätsprüfung für das Mehrfach-Bit-Abtastwort in dieser Zeile durchgeführt werden kann.

3. Fernsehempfänger nach Anspruch 1 oder 2, der Mittel enthält zum Vergleichen der nicht-verschachtelten Abschnitte einer Zahl von benachbarten Rahmen, um irgend einen Fehler in den nicht-verschachtelten Abschnitten zu bestimmen.

## Revendications

1. Récepteur de télévision (3) pour un système de transmission (1) destiné à fournir un signal son/de données pour accompagner un signal vidéo transmis, le récepteur de télévision (3) comprenant :
- des moyens (7) pour entrer un signal son/de données transmis comprenant un train d'éléments numériques (bits) formés en une pluralité de cadres, chaque cadre comprenant au moins quatre sections, en particulier une section (mot d'alignement de cadres, FAW) pour indiquer le début d'un cadre, une section (C) pour contenir des informations de commande, une section (AD) pour contenir des données supplémentaires et une section (A1, B1, A2, ..., B31, A32, B32) pour contenir les informations son/de donnnées du signal son/de données,
- des moyens (13) pour sortir le signal son/de données résultant associé à un signal vidéo, ce par quoi la section d'informations son/de données du signal son/de données reçu est codée comme mots d'échantillon de bit multiple, chaque mot ayant un bit de parité associé qui est ajouté à chaque mot d'échantillon multiple du signal son pour une détection d'erreurs et à des fins de signalement d'un facteur d'échelle, et le récepteur de télévision comprenant,
- des moyens (9) pour désentrelacer seulement la section d'informations son/de données (A1, B1, A2, ..., B31, A32, B32) comprenant le bit de parité (P) mais pas la section d'indication (mot d'alignement de cadre FAW), la section des données supplémentaires (AD) et la section de commande (C) d'un cadre, les moyens de désentralecement (9) comprenant des moyens pour changer la séquence des éléments numériques (bits) de la section d'informations son/de données à l'intérieur de chaque cadre entier tel qu'il est transmis selon une relation prédéterminée (tableau 1) de manière à produire une séquence pour la sortie par le récepteur de télévision (3),
- dans lequel, si une sortie provenant d'un détecteur (40) de section d'indication indique la détection d'une structure de code d'alignement de cadre valide, on démarre un compteur horaire (41) qui est utilisé pour vérifier si une modification du signal (Cₒ) du bit de signalisation dans l'information de la section de commande (C) a été détectée dans un détecteur (42) du signal (Cₒ) du bit de signalisation et dans lequel le détecteur de section d'indication est remis à zéro pour initialiser une nouvelle séquence de verrouillage d'alignement d'un cadre si aucune modification du signal (Cₒ) du bit de signalisation a été détectée afin d'éviter de verrouiller le récepteur de télévision sur un mot d'alignement de cadre faux.

2. Récepteur de télévision (3) pour un système de transmission (1) destiné à fournir un signal son/de données pour accompagner un signal vidéo transmis, le récepteur de télévision (3) comprenant :
- des moyens (7) pour entrer un signal son/de données transmis comprenant un train d'éléments numériques (bits) formés en une pluralité de cadres, chaque cadre comprenant au moins quatre sections, en particulier une section (mot d'alignement de cadres, FAW) pour indiquer le début d'un cadre, une section (C) pour contenir des informations de commande, une section (AD) pour contenir des données supplémentaires et une section (A1, B1, A2, ..., B31, A32, B32) pour contenir les informations son/de donnnées du signal son/de données,
- des moyens (13) pour sortir le signal son/de données résultant associé à un signal vidéo, ce par quoi la section d'informations son/de données du signal son/de données reçu est codée comme mots d'échantillon de bit multiple, chaque mot ayant un bit de parité associé qui est ajouté à chaque mot d'échantillon multiple du signal son pour une détection d'erreurs et à des fins de signalement d'un facteur d'échelle et est reçu après ce mot d'échantillon, le nombre de bits par mot d'échantillons étant de 10 lorsque le bit de parité n'est pas pris en compte et le récepteur de télévision comprenant de plus :
- des moyens (9) pour désentrelacer seulement la section d'informations son/de données (A1, B1, A2, ..., B31, A32, B32) comprenant le bit de parité (P) mais pas la section d'indication (mot d'alignement de cadre FAW), la section des données supplémentaires (AD) et la section de commande (C) d'un cadre, les moyens de désentralecement (9) comprenant des moyens pour changer la séquence des éléments numériques (bits) de la section d'informations son/de données à l'intérieur de chaque cadre entier tel qu'il est transmis selon une relation prédéterminée (tableau 1) de manière à produire une séquence pour la sortie par le récepteur de télévision (3),
- chaque cadre étant constitué de 728 bits, dans lequel la section pour contenir les informations son/de données a une longueur de 704 bits et la profondeur de désentrelacement dans cette section égale quatre fois le nombre de bits de la longueur du mat d'échantillon de bit multiple incluant ledit bit de parité associé,
- et dans lequel le moyen (9) de désentrelacement comporte un moyen de stockage (20) organisé selon un format de 64 rangs par 11 colonnes pour garder une pluralité de cadres de signaux son/de données,
- des compteurs (21, 22, 23) pour réaliser l'entrée des signaux son/de données vers et la sortie à partir du moyen de stockage (20), un circuit logique pour réaliser la reconfiguration des compteurs entre un mode réalisant l'entrée des signaux vers le moyen de stockage et un autre mode réalisant leur sortie dudit moyen,
- les compteurs (21, 22, 23) comparant un compteur de rangées et un compteur de colonnes (21) commandant le moyen de stockage (20),
- le compteur rangée étant séparé en un compteur à division par 4 (22) pour fournir les deux bits, les moins significatifs de l'adresse de rangée complète du moyen de stockage (20) et un compteur à division par 16 (23) fournissant les bits restants de l'adresse de rangée complète
et dans lequel pour écrire le moyen de stockage (20) le dépassement dudit compteur à division par 16 démarre ledit compteur de colonnes 21 et le dépassement dudit compteur de colonnes démarre à son tour le compteur à division par 4,
et dans lequel ledit compteur à division par 16 est commandé par une horloge de désentrelacement pour l'écriture dans ledit moyen de stockage (20) et ledit compteur à division par 4 est commandé par l'horloge de lecture du moyen de stockage, et dans lequel les données entrelacées des différents cadres sont écrites alternativement dans les différentes mémoires RAM du moyen de stockage (20) pour désentrelacement dont les colonnes sont adressées par ledit compteur (21) de colonnes.

3. Récepteur de télévision selon les revendications 1 ou 2 comprenant des moyens pour comparer les sections non entrelacées d'un nombre de cadres adjacents pour déterminer toute erreur dans les sections non-entrelacées.
